# FASCICULE DE BREVET EUROPEEN

(11) **EP 3 520 166 B1**
(45) Date de publication et mention de la délivrance du brevet: **20.07.2022**
(21) Numéro de dépôt: 17787218.1
(22) Date de dépôt: 27.09.2017
(51) Int. Cl.: H01M 10/6568, F01P 3/00, H01M 10/6569, H01M 10/6557, H01M 10/613, H01M 10/6567, H01M 10/659, F28D 1/047, F28D 20/02, F28D 20/00, F28F 1/02, F28F 9/02

(54) **DISPOSITIF DE REGULATION THERMIQUE**
THERMISCHE REGULIERUNGSVORRICHTUNG
THERMAL REGULATION DEVICE

(30) Priorité: 27.09.2016 FR 1659101; 27.09.2016 FR 1659103
(43) Date de publication de la demande: 07.08.2019
(73) Titulaire: Valeo Systemes Thermiques, 78322 Le Mesnil Saint-Denis Cedex (FR)
(72) Inventeur: TISSOT, Julien, 78322 Le Mesnil Saint-Denis Cedex (FR); AZZOUZ, Kamel, 78322 Le Mesnil Saint-Denis Cedex (FR); TRAORE, Issiaka, 78322 Le Mesnil Saint-Denis Cedex (FR); BLANDIN, Jérémy, 78322 Le Mesnil Saint-Denis Cedex (FR); BOISSELLE, Patrick, 53022 Laval (FR); BRY, Samuel, 53022 Laval (FR); SERVANTIE, Ambroise, 53022 Laval (FR)
(74) Mandataire: Valeo Systèmes Thermiques
(86) Numéro de dépôt international: PCT/FR2017/052609
(87) Numéro de publication internationale: WO 2018/060604

(56) Documents cités:
- FR-A1- 2 945 859
- US-A1- 2001 033 961
- US-A1- 2004 104 020
- US-A1- 2010 307 723
- US-A1- 2016 211 558

## Description

L'invention concerne la régulation thermique, notamment dans le domaine automobile.

Dans un véhicule automobile, en particulier électrique et/ou hybride, une batterie électrique permet de stocker et de fournir une énergie suffisante pour faire fonctionner le véhicule automobile.

La température de la batterie influence à la fois sa performance de stockage et sa durée de vie. Une température trop basse de la batterie entraîne un déclin de sa capacité de stockage. Une température trop élevée, due par exemple à une surchauffe de la batterie, réduit sa durée de vie, voire est susceptible d'entraîner une destruction irréversible de la batterie.

Il est donc nécessaire de maintenir la batterie à une température adéquate, par exemple autour de 20 degrés, afin de maintenir une capacité de stockage et une durée de vie maximale.

A cet effet, il est connu d'utiliser un dispositif afin de réguler la température de la batterie. Un tel dispositif utilise généralement un fluide caloporteur circulant dans un circuit, le circuit passant à proximité ou au contact de la batterie. Le fluide caloporteur généralement utilisé est l'air ambiant ou un liquide, comme par exemple de l'eau ou un liquide réfrigérant.

Le fluide caloporteur peut ainsi absorber la chaleur émise par la batterie afin de la refroidir et évacuer par la suite cette chaleur au niveau d'un ou plusieurs échangeurs thermiques, tel qu'un radiateur ou un circuit réfrigérant. Le fluide caloporteur peut également, si besoin, apporter de la chaleur pour réchauffer la batterie en étant par exemple relié à un système de chauffage.

Toutefois, le fluide du dispositif de régulation thermique s'échauffe au fur et à mesure qu'il circule dans le circuit en absorbant la chaleur dégagée par la batterie. Il en résulte un différentiel de température entre l'entrée et la sortie du dispositif qui peut être significatif, de l'ordre de plusieurs degrés. Cette différence de température au sein du fluide peut gêner la gestion de la température de la batterie et son maintien à une température de fonctionnement optimal.

En outre, des pics de charge de la batterie lors de son utilisation peuvent entraîner une augmentation brutale de température. Un dispositif de régulation classique ne permet pas de limiter l'apparition de tels pics de température et de refroidir suffisamment rapidement la batterie.

Le matériau à changement de phase permet d'augmenter l'inertie et d'améliorer l'homogénéité thermique du dispositif.

Toutefois, il est souvent difficile de réaliser de façon satisfaisante un tel dispositif comprenant le matériau à changement de phase et le fluide caloporteur.

Les documents FR 2945859 A1, US 2010/307723 A1 et US 2004/104020 A1 représentent des exemples pertinents de l'art antérieur.

Le but de l'invention est de remédier au moins partiellement à ces inconvénients.

L'invention vise plus précisément un dispositif de régulation thermique facile à mettre en œuvre et permettant de réguler efficacement la température d'une batterie, de maintenir la batterie dans une plage de température satisfaisante ainsi que d'améliorer l'homogénéité de la température de la batterie.

A cet effet, la présente invention a pour objet un dispositif de régulation thermique selon la revendication 1.

Ainsi, le dispositif de régulation thermique peut être facilement rempli notamment de matériau à changement de phase.

Le matériau à changement de phase étant alors situé dans les microcanaux, ceux-ci participent à la régulation de la température de la batterie.

Selon une autre caractéristique de l'invention, le canal de remplissage s'étend sensiblement perpendiculairement au conduit.

Selon une autre caractéristique de l'invention, le collecteur et le canal de remplissage sont constitués par deux tubes distincts l'un de l'autre.

Selon une autre caractéristique de l'invention, le dispositif comprend une paroi de séparation du collecteur et du canal de remplissage.

Selon une autre caractéristique de l'invention, la première partie de microcanaux a une longueur supérieure à la seconde partie de microcanaux pour déboucher dans le collecteur.

Selon une autre caractéristique de l'invention, la première partie de microcanaux et la seconde partie de microcanaux ont une longueur identique.

Selon une autre caractéristique de l'invention, chaque microcanal de la seconde partie de canaux comporte au moins une ouverture débouchant dans le canal de remplissage, chaque microcanal de la seconde partie de canaux étant obturé au niveau du collecteur.

Selon une autre caractéristique de l'invention, le canal de remplissage comprend deux ouvertures obturées, dont au moins une par un rivet.

L'invention a également pour objet un procédé de remplissage d'un dispositif de régulation thermique tel que décrit précédemment, dans lequel :
- on remplit le canal de remplissage avec le matériau à changement de phase de sorte à remplir simultanément l'ensemble de la seconde partie de microcanaux, et
- on ferme le canal de remplissage.

L'invention a également pour objet un ensemble comprenant un dispositif de régulation thermique tel que décrit précédemment et une batterie électrique, le dispositif étant configuré pour réguler la température de la batterie électrique.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés, dans lesquels :
- la figure 1 représente une vue en perspective d'une batterie et d'un dispositif de régulation thermique selon l'invention ;
- la figure 2 représente une vue en coupe d'un tube du dispositif de régulation thermique de la figure 1 selon le plan de coupe II-II ;
- les figures 3A et 3B représentent une vue schématique agrandie du collecteur intermédiaire du dispositif de régulation thermique de la figure 1 selon deux modes de réalisation différents ;
- les figures 4A-4D représentent schématiquement une vue en coupe d'un tube selon plusieurs géométries différentes ;
- les figures 5A-5E représentent schématiquement une vue en coupe d'un tube dont les canaux sont remplis selon plusieurs réalisations différentes ;
- les figures 6A et 6B représentent des vues en coupe du collecteur respectivement des figures 3A et 3B selon le plan de coupe VI-VI ;
- la figure 7 représente une vue en coupe du collecteur intermédiaire de la figure 3B selon le plan de coupe VII-VII ;
- les figures 8A et 8B représentent schématiquement la fermeture du collecteur respectivement des figures 3A et 3B ;
- les figures 9A et 9B représentent des vues en coupe du collecteur fermés respectivement des figures 8A et 8B selon un plan de coupe IX-IX ; et
- la figure 10 représente une vue en coupe d'un collecteur selon un autre mode de réalisation.

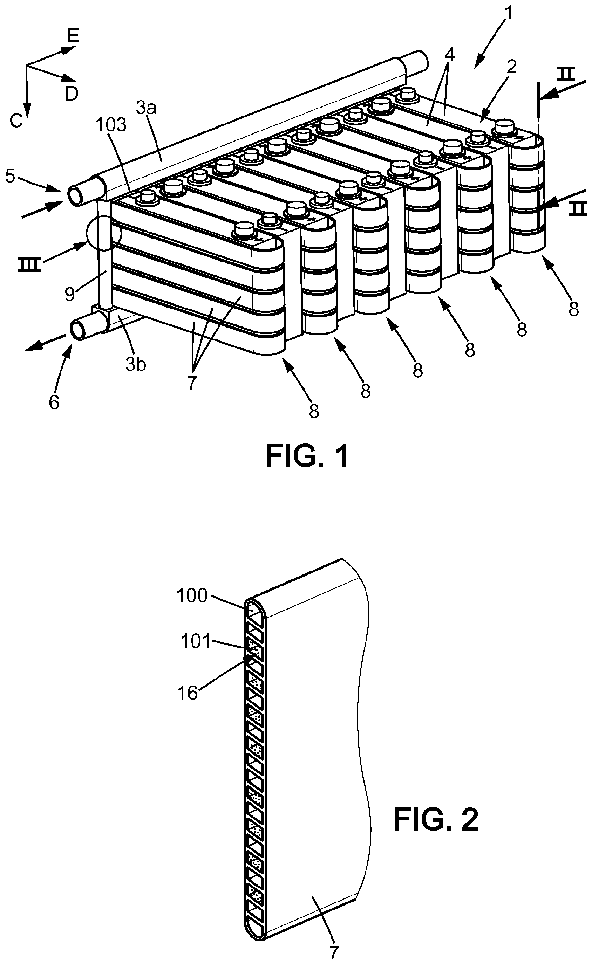

Comme illustrée sur la figure 1, l'invention concerne un dispositif de régulation thermique 1.

Le dispositif de régulation thermique 1 peut avantageusement être un échangeur de chaleur.

Le dispositif de régulation thermique 1 est en métal, par exemple en aluminium ou en alliage d'aluminium.

Le dispositif de régulation thermique 1 est disposé à proximité ou au contact d'une batterie électrique 2.

La batterie 2 peut être constituée d'une pluralité de cellules 4. Les cellules 4 sont reliées entre elles de sorte à fournir un courant électrique au véhicule automobile.

Selon le mode de réalisation de la figure 1, la batterie 2 comprend plus particulièrement onze cellules 4 adjacentes les unes aux autres.

Alternativement, la batterie 2 peut être une batterie simple de grande dimension.

Le dispositif de régulation thermique 1 permet une circulation d'un fluide, en particulier d'un fluide de refroidissement, à proximité ou au contact de la batterie 2.

A cet effet, le dispositif de régulation thermique 1 comprend un premier collecteur 3a et un second collecteur 3b. Les collecteurs 3a, 3b sont de section sensiblement rectangulaire, cylindrique ou encore de toute autre forme.

Comme représentés sur la figure 1, le premier collecteur 3a et le second collecteur 3b sont parallèles et s'étendent selon une direction de circulation E.

Le dispositif de régulation thermique 1 comprend une entrée 5 et une sortie du fluide 6, représentées selon la réalisation de la figure 1 respectivement sur le premier collecteur 3a et le second collecteur 3b.

Le dispositif de régulation thermique 1 comprend en outre au moins un conduit 7. Le dispositif de régulation thermique 1 permet un échange de chaleur entre le fluide circulant dans le tube 7 et la batterie 2.

Selon la réalisation de la figure 1, le dispositif de régulation thermique 1 comprend une pluralité de conduits 7.

Plus particulièrement, des faisceaux de tubes 8 comprenant chacun un ou plusieurs conduits 7 sont disposés respectivement autour d'une ou plusieurs cellules 4 de la batterie 2.

Selon la représentation de la figure 1, chaque faisceau de tubes 8 comprend cinq conduits 7.

Les faisceaux de tubes 8 sont plus particulièrement disposés entre deux cellules 4 de la batterie 2. Sur le mode de réalisation de la figure 1, un faisceau de tubes 8 est disposé autour d'une cellule 4 sur deux de la batterie 2.

Les conduits 7 s'étendent dans une direction d'élongation D perpendiculaire à la direction de circulation E. Les conduits 7 ont une forme sensiblement en U, de sorte à entourer au moins une cellule 4 de la batterie 2.

Bien entendu, l'invention ne se limite pas à cette forme de conduit 7. Par exemple, les conduits 7 peuvent présenter une forme de I, auquel cas, avantageusement, les tubes 7 sont disposés de part et d'autre de chaque cellule électrique.

Les conduits 7 de chaque faisceau de tubes 8 sont disposés les uns à la suite des autres selon une direction d'agencement C perpendiculaire à la direction de circulation E et à la direction d'élongation D.

Les conduits 7 d'un faisceau de tubes 8 sont avantageusement identiques.

Toutefois, l'invention n'est pas limitée à une telle configuration et un faisceau de tubes 8 peut comprendre un nombre différent de conduits 7 et/ou des conduits 7 de formes variables.

Les conduits 7 peuvent par exemple être de type plat, à section circulaire ou de toute autre forme, permettant la circulation du fluide.

Les conduits 7 sont connectés fluidiquement au premier collecteur 3a et au second collecteur 3b.

Comme illustré sur la figure 1, pour assurer la circulation du fluide dans plusieurs conduits 7 d'un faisceau de tubes 8, le dispositif de régulation thermique 1 peut comprendre un ou plusieurs collecteurs intermédiaires d'entrée 9.

Un faisceau de tubes 8 débouche dans chaque collecteur intermédiaire d'entrée 9.

Toutefois, cette configuration n'est pas limitative et il pourrait être envisagé de faire déboucher les conduits 7 directement dans le premier collecteur 3a.

Les collecteurs intermédiaires d'entrée 9 s'étendent selon la direction d'agencement C entre le premier collecteur 3a et le second collecteur 3b.

Les collecteurs intermédiaires d'entrée 9 débouchent dans le premier collecteur 3a.

Chaque collecteur intermédiaire d'entrée 9 comprend également une cloison intérieure (non représentée) située au niveau du second collecteur 3b. La cloison obture localement le collecteur intermédiaire d'entrée 9 de sorte à forcer la circulation de la totalité du fluide venant du collecteur intermédiaire d'entrée 9 vers le faisceau de tubes 8.

De la même façon, le second collecteur 3b comprend également un ou plusieurs collecteurs intermédiaires de sortie 103 dans lesquels débouchent respectivement les faisceaux de tubes 8.

Les collecteurs intermédiaires de sortie 103 débouchent dans le second collecteur 3b.

Toutefois, cette configuration n'est pas limitative, et il pourrait être envisagé de faire déboucher les conduits 7 directement dans le second collecteur 3b.

Le dispositif de régulation thermique 1 est ainsi configuré pour établir une circulation en série du fluide en passant tout d'abord dans le premier collecteur 3a, débouchant dans les collecteurs intermédiaires d'entrée 9, en passant ensuite dans les faisceaux de tubes 8, en passant dans le collecteurs intermédiaires de sortie 103, puis enfin dans le second collecteur 3b.

Le fluide permet ainsi de réguler la température de la batterie 2.

Le dispositif de régulation thermique 1 comprend au moins un collecteur 11.

Le dispositif de régulation thermique 1 comprend également au moins un canal de remplissage 12.

Le collecteur 11 et le canal de remplissage 12 sont étanches l'un de l'autre.

Le canal de remplissage permet d'introduire un matériau à changement de phase dans le dispositif 1, comme il sera détaillé ultérieurement.

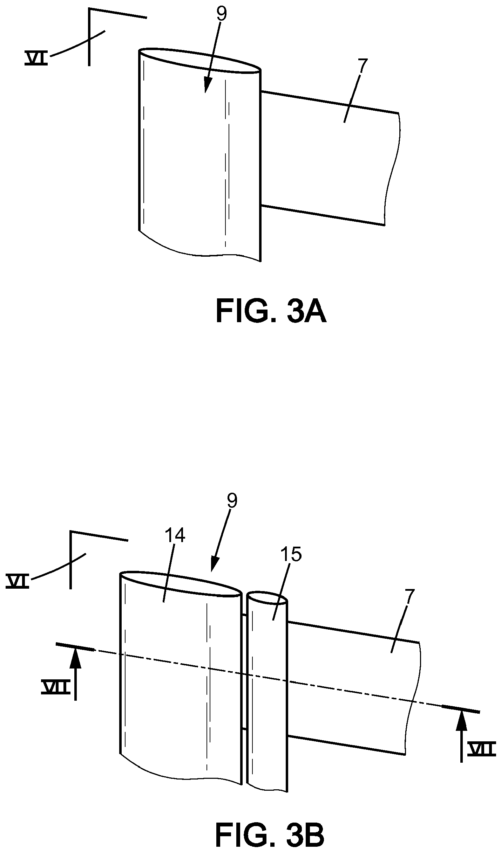

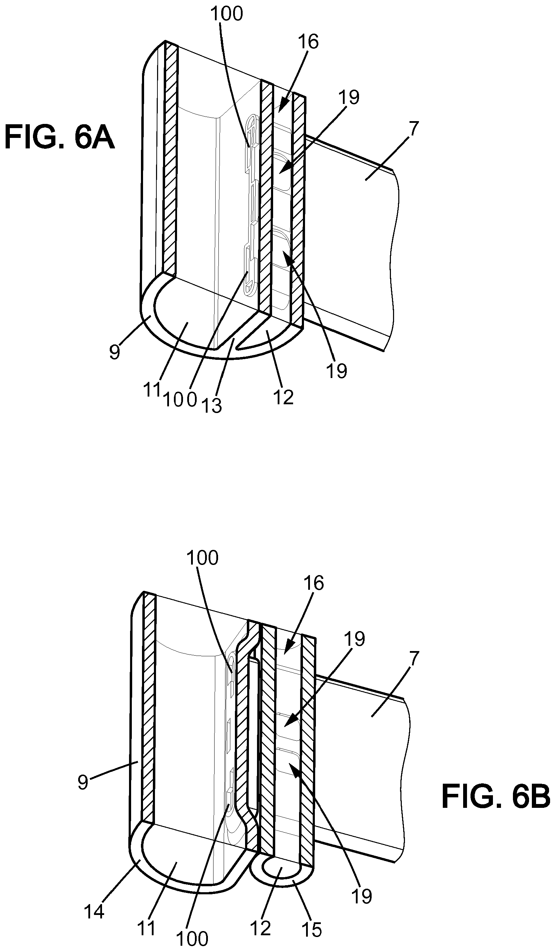

Selon une première réalisation plus particulièrement représentée sur les figures 3A, 6A, 8A et 9A, le collecteur 11 et le canal de remplissage 12 sont constitués par un tube unique. Selon cette première réalisation une paroi de séparation 13, visible sur la figure 6A, sépare de façon étanche le collecteur 11 du canal de remplissage 12.

Selon une seconde réalisation plus particulièrement représentée sur les figures 3B, 6B, 7, 8B, 9B, le collecteur 11 et le canal de remplissage 12 sont respectivement constitués par deux tubes 14, 15 distincts l'un de l'autre.

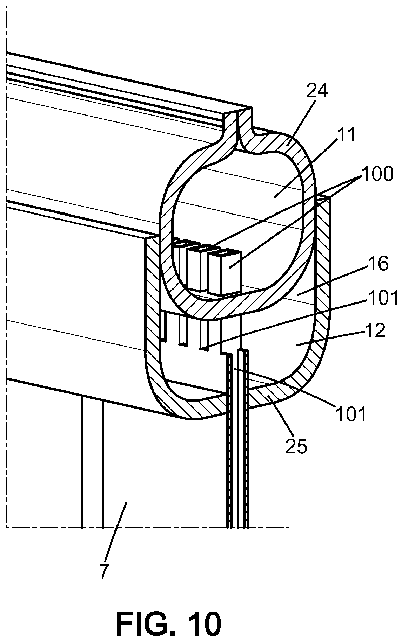

Selon encore une troisième réalisation plus particulièrement représentée sur la figure 10, le collecteur 11 est constitué par un tube 24, tandis que le canal de remplissage 12 est formé par une paroi déformée 25 fixée au tube 24 du collecteur 11.

La paroi déformée 25 est avantageusement fixée au tube 24 par brasage.

La paroi déformée 25 présente une forme générale en U.

Le collecteur 11 est adapté pour permettre la circulation du fluide dans le dispositif de régulation thermique 1, notamment entre le premier collecteur 3a et un faisceau de tubes 8.

Le canal de remplissage 12 comprend un matériau à changement de phase 16 (en pointillé sur les figures 2, 4 et 5).

Le matériau à changement de phase 16 est avantageusement sous une forme liquide ou visqueuse, dans au moins un de ses états de matière, et de préférence au moins pour le remplissage du dispositif 1 en matériau à changement de phase, comme il sera détaillé ultérieurement.

Le matériau à changement de phase 16 peut être choisi parmi les matériaux à changement de phase organique, inorganique ou encore d'origine végétale. Le matériau à changement de phase 16 a une température de changement de phase avantageusement comprise entre 20 et 40 degrés.

Comme illustré sur la figure 2, chaque conduit 7 est avantageusement un tube multicanal.

Plus précisément, chaque conduit 7 comprend au moins un canal 100, dit microcanal 100, adapté pour permettre une circulation du fluide dans le dispositif de régulation thermique 1, et au moins un canal 101, dit microcanal 101, comprenant le matériau à changement de phase 16.

On note que le canal de remplissage 12 et les microcanaux 101 servent à encapsuler le matériau à changement de phase.

Chaque microcanal 100, 101 peut avoir une section parallépipédique, notamment rectangulaire.

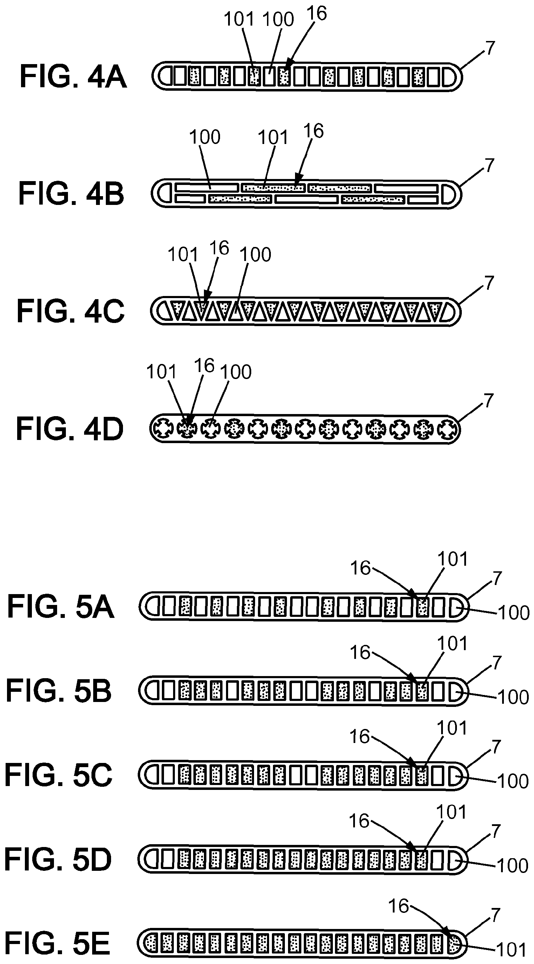

Comme illustré sur les figures 4A à 4D, chaque microcanal 100, 101 peut également avoir toute autre géométrie de section, par exemple aplatie, en triangle, en étoile, ou autre.

Les microcanaux 100, 101 d'un même conduit 7 ont avantageusement une forme identique.

Comme illustré sur les figures 4 ou 5 qui sont des vues en coupe d'un conduit 7 de faisceau de tube 8, un conduit 7 peut comprendre une première partie de canaux 100 et/ou une seconde partie de canaux 101.

Chaque conduit 7 peut comprendre un nombre plus ou moins élevé de microcanaux 100 comprenant le fluide ou de canaux 101 comprenant le matériau à changement de phase 16.

Sur les figures 5A-5E, on a représenté un conduit 7 comprenant vingt microcanaux 100, 101.

Les figures 5A-5D illustrent d'autres configurations dans lequel le conduit 7 comprend un nombre variable de microcanaux 100, 101 comprenant un matériau à changement de phase 16 ou du fluide. Sur la figure 5E, le conduit 7 ne comprend aucun microcanal 100 comprenant le fluide mais comprend exclusivement des microcanaux 101 comprenant le matériau à changement de phase 16.

Le rapport entre le nombre de microcanaux 100 comprenant le fluide et le nombre de microcanaux 101 comprenant le matériau à changement de phase 16 est plus particulièrement adapté en fonction des besoins en terme de chaleur à transporter avec le fluide ou à absorber par le matériau à changement de phase 16.

La première partie de microcanaux 100 débouche dans le collecteur 11, tandis que la seconde partie de microcanaux 101 débouche dans le canal de remplissage 12.

Selon une réalisation illustrée par exemple sur la figure 10, la première partie de microcanaux 100 est plus longue que la seconde partie de canaux 101.

En particulier, la première partie de microcanaux 100 traverse le canal de remplissage 12, tandis que la seconde partie de canaux 101 se termine dans le canal de remplissage 12.

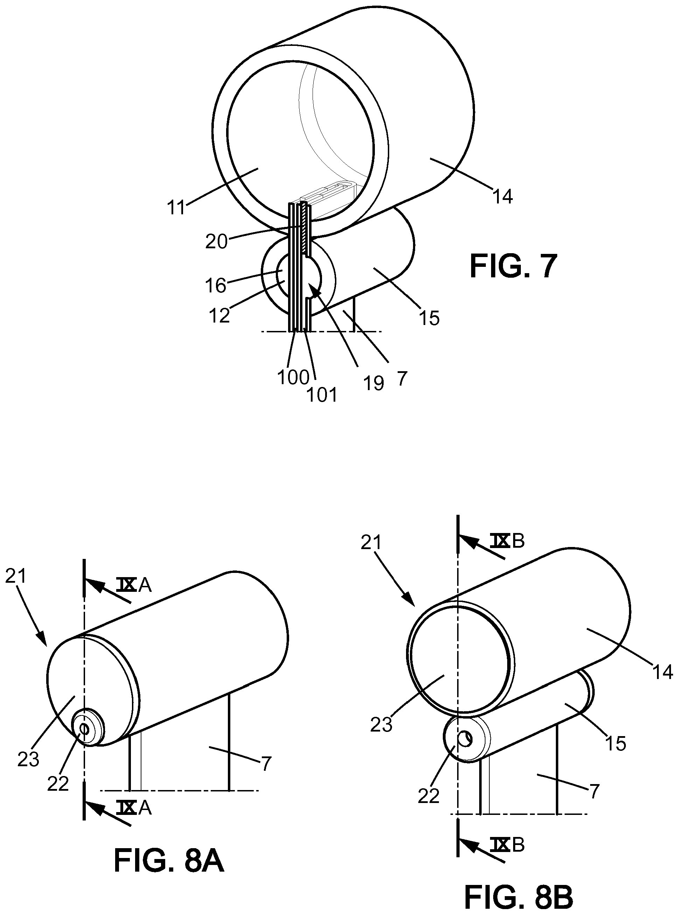

Selon une autre réalisation illustrée par exemple sur la figure 7, les première et seconde parties de microcanaux 100, 101 ont une longueur identique, de sorte que l'ensemble des microcanaux 100, 101 traversent le canal de remplissage 12.

Selon cette réalisation, chaque microcanal de la seconde partie de microcanaux 101 comprend alors une ouverture 19, notamment latérale, débouchant dans le canal de remplissage 12. Chaque microcanal de la seconde partie de canaux 101 est également obturé, par exemple au moyen d'un bouchon 20, au niveau du collecteur 11.

L'invention a également pour objet un procédé de remplissage du dispositif de régulation thermique 1 selon l'invention.

Dans une première étape de remplissage, on remplit le canal de remplissage 12 avec le matériau à changement de phase 16.

Le remplissage peut être réalisé par une ouverture d'extrémité 21 illustrée sur les figures 8A et 8B.

Le remplissage du canal de remplissage 12 permet de remplir la seconde partie de microcanaux 101 qui est connectée fluidiquement avec le canal de remplissage 12.

L'étape de remplissage permet ainsi un remplissage en une fois de l'ensemble de la seconde partie de microcanaux 101, sans qu'il soit nécessaire de remplir le matériau à changement de phase 16 dans chacun des microcanaux 101 séparément.

Afin de s'assurer que la seconde partie de microcanaux 101 est correctement remplie, on peut remplir totalement le canal de remplissage 12 avec le matériau à changement de phase 16.

Dans une deuxième étape de fermeture, on obture, notamment de façon irréversible, le canal de remplissage 12.

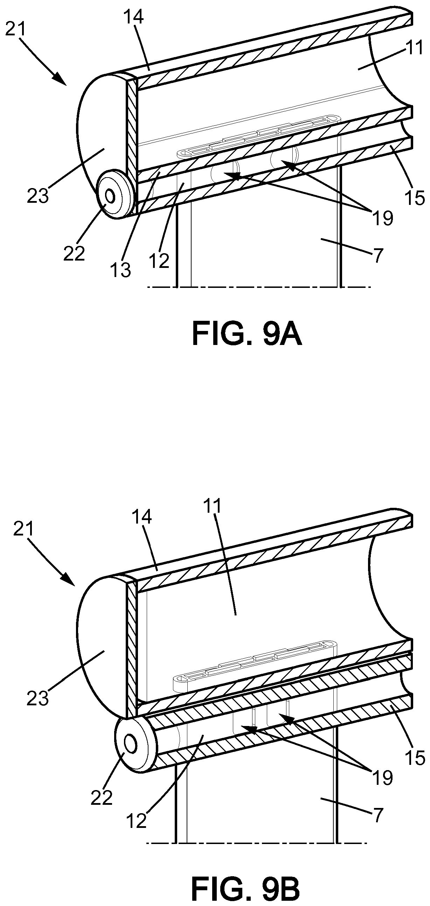

La fermeture du canal de remplissage 12 peut être réalisée au moyen d'un rivet 22, comme représenté sur les figures 8A, 8B, 9A, 9B.

La fermeture du canal de remplissage 12 peut également être réalisée par brasage ou sertissage.

La fermeture peut être réalisée par un bouchon vissée, et n'est pas réversible alors.

Le collecteur 11 peut ensuite être rempli du fluide et ensuite fermé, si nécessaire, par une paroi de fermeture 23, par sertissage par exemple.

Selon le second mode de réalisation dans lequel le collecteur 11 et le canal de remplissage 12 sont réalisés par un même tube du collecteur, le collecteur peut être obturé à une extrémité par une paroi de fermeture 23. La paroi de fermeture 23 comprend un orifice débouchant dans le canal de remplissage 12. L'orifice permet ainsi de remplir le canal de remplissage 12 avant de le fermer avec un rivet 22 par exemple, ou par tout autre moyen.

Bien évidemment, l'invention n'est pas limitée aux modes de réalisation décrits précédemment et fournis uniquement à titre d'exemple. L'invention est exclusivement définie par les revendications ci-jointes.

On note également que chaque conduit 7 peut constituer une plaque ou un tube d'un d'échangeur de chaleur, l'échangeur de chaleur comprenant un faisceau de plaques ou de tubes pour un premier fluide et une circulation d'un deuxième fluide entre les plaques ou tubes.

Dans ce cas, le collecteur du premier fluide est alors le collecteur 11.

## Revendications

1. Dispositif de régulation thermique (1) comprenant :
- un conduit (7) muni d'une pluralité de canaux, dits microcanaux, l'un au moins des microcanaux contenant un matériau à changement de phase, et
- un collecteur (11) dans lequel débouche au moins une partie du conduit (7)
- un canal de remplissage (12) de matériau à changement de phase relié fluidiquement au conduit (7) et étanche du collecteur (11),
dans lequel un fluide de refroidissement est apte à circuler dans une première partie de la pluralité de microcanaux (100) et une seconde partie de la pluralité de microcanaux (101) comprend le matériau à changement de phase, et dans lequel la première partie de microcanaux (100) débouche dans le collecteur (11) et la seconde partie de microcanaux (101) débouche dans le canal de remplissage (12) et dans lequel la première partie de microcanaux (100) traverse le canal de remplissage (12) pour déboucher dans le collecteur (11).

2. Dispositif (1) selon la revendication précédente, dans lequel le canal de remplissage (12) s'étend sensiblement perpendiculairement au conduit (7).

3. Dispositif (1) selon l'une des revendications précédentes dans lequel le collecteur (11) et le canal de remplissage (12) sont constitués par deux tubes (14, 15) distincts l'un de l'autre.

4. Dispositif (1) selon l'une des revendications précédentes, comprenant une paroi de séparation (13) du collecteur (11) et du canal de remplissage (12).

5. Dispositif (1) selon l'une des revendications précédentes, dans lequel la première partie de microcanaux (100) a une longueur supérieure à la seconde partie de microcanaux (101) pour déboucher dans le collecteur (11).

6. Dispositif (1) selon l'une des revendications 1 à 4, dans lequel la première partie de microcanaux (100) et la seconde partie de microcanaux (101) ont une longueur identique.

7. Dispositif (1) selon la revendication précédente, dans lequel chaque microcanal de la seconde partie de canaux (101) comporte au moins une ouverture (19) débouchant dans le canal de remplissage (12), chaque microcanal de la seconde partie de canaux (101) étant obturé au niveau du collecteur (11).

8. Dispositif selon l'une des revendications précédentes, dans lequel le canal de remplissage (12) est obturé en deux ouvertures, dont au moins une par un rivet (22).

9. Ensemble comprenant un dispositif de régulation thermique (1) selon l'une quelconque des revendications 1 à 8 et une batterie électrique (2), le dispositif (1) étant configuré pour réguler la température de la batterie électrique (2).

10. Procédé de remplissage d'un dispositif de régulation thermique (1) selon l'une quelconque des revendications 1 à 8, dans lequel :
- on remplit le canal de remplissage (12) avec le matériau à changement de phase de sorte à remplir simultanément l'ensemble de la seconde partie de microcanaux (101), et
- on ferme le canal de remplissage (12).

## Patentansprüche

1. Thermische Regulierungsvorrichtung (1), die Folgendes beinhaltet:
- eine Leitung (7), die über eine Vielzahl von Kanälen, als Mikrokanäle bezeichnet, verfügt, wobei mindestens einer der Mikrokanäle ein Phasenwechselmaterial enthält, und
- einen Sammler (11), in den mindestens ein Teil der Leitung (7) mündet,
- einen Kanal zum Einfüllen (12) eines Phasenwechselmaterials, der mit der Leitung (7) fluidisch verbunden und gegenüber dem Sammler (11) dicht ist, wobei ein Kühlfluid dazu fähig ist, in einem ersten Teil der Vielzahl von Mikrokanälen (100) zu fließen, und ein zweiter Teil der Vielzahl von Mikrokanälen (101) das Phasenwechselmaterial beinhaltet und wobei der erste Teil von Mikrokanälen (100) in den Sammler (11) mündet und der zweite Teil von Mikrokanälen (101) in den Füllkanal (12) mündet
und wobei der erste Teil von Mikrokanälen (100) den Füllkanal (12) durchquert, um in den Sammler (11) zu münden.

2. Vorrichtung (1) nach dem vorhergehenden Anspruch, wobei sich der Füllkanal (12) im Wesentlichen senkrecht zu der Leitung (7) erstreckt.

3. Vorrichtung (1) nach einem der vorhergehenden Ansprüche, wobei der Sammler (11) und der Füllkanal (12) aus zwei Rohren (14, 15) bestehen, die voneinander getrennt sind.

4. Vorrichtung (1) nach einem der vorhergehenden Ansprüche, beinhaltend eine Wand zum Trennen (13) des Sammlers (11) und des Füllkanals (12).

5. Vorrichtung (1) nach einem der vorhergehenden Ansprüche, wobei der erste Teil von Mikrokanälen (100) eine größere Länge als der zweite Teil von Mikrokanälen (101) aufweist, um in den Sammler (11) zu münden.

6. Vorrichtung (1) nach einem der Ansprüche 1 bis 4, wobei der erste Teil von Mikrokanälen (100) und der zweite Teil von Mikrokanälen (101) eine identische Länge aufweisen.

7. Vorrichtung (1) nach dem vorhergehenden Anspruch, wobei jeder Mikrokanal des zweiten Teils von Kanälen (101) mindestens eine Öffnung (19) umfasst, die in den Füllkanal (12) mündet, wobei jeder Mikrokanal des zweiten Teils von Kanälen (101) gegenüber dem Sammler (11) abgedichtet ist.

8. Vorrichtung nach einem der vorhergehenden Ansprüche, wobei der Füllkanal (12) an zwei Öffnungen abgedichtet ist, wovon an mindestens einer durch einen Niet (22).

9. Anordnung, die eine thermische Regulierungsvorrichtung (1) nach einem der Ansprüche 1 bis 8 und eine elektrische Batterie (2) beinhaltet, wobei die Vorrichtung (1) dazu konfiguriert ist, die Temperatur der elektrischen Batterie (2) zu regulieren.

10. Verfahren zum Befüllen einer thermischen Regulierungsvorrichtung (1) nach einem der Ansprüche 1 bis 8, wobei:
- der Füllkanal (12) mit dem Phasenwechselmaterial befüllt wird, sodass der gesamte zweite Teil von Mikrokanälen (101) gleichzeitig befüllt wird, und
- der Füllkanal (12) geschlossen wird.

## Claims

1. Thermal regulation device (1) comprising:
- a duct (7) provided with a plurality of channels, called microchannels, at least one of the microchannels containing a phase-change material, and
- a manifold (11) in which at least a part of the duct (7) emerges,
- a phase-change material filling channel (12) fluidically linked to the duct (7) and tight to the manifold (11),
wherein a coolant can circulate in a first set of the plurality of microchannels (100) and a second set of the plurality of microchannels (101) comprises the phase-change material, and wherein the first set of microchannels (100) emerges in the manifold (11) and the second set of microchannels (101) emerges in the filling channel (12)
and wherein the first set of microchannels (100) passes through the filling channel (12) to emerge in the manifold (11).

2. Device (1) according to the preceding claim, wherein the filling channel (12) extends substantially at right angles to the duct (7) .

3. Device (1) according to one of the preceding claims, wherein the manifold (11) and the filling channel (12) are composed of two mutually distinct pipes (14, 15).

4. Device (1) according to one of the preceding claims, comprising a separating wall (13) separating the manifold (11) and the filling channel (12).

5. Device (1) according to one of the preceding claims, wherein the first set of microchannels (100) has a length greater than the second set of microchannels (101) to emerge in the manifold (11).

6. Device (1) according to one of Claims 1 to 4, wherein the first set of microchannels (100) and the second set of microchannels (101) have an identical length.

7. Device (1) according to the preceding claim, wherein each microchannel of the second set of channels (101) comprises at least one opening (19) emerging in the filling channel (12), each microchannel of the second set of channels (101) being blocked at the manifold (11).

8. Device according to one of the preceding claims, wherein the filling channel (12) is blocked at two openings, at least one of which by a rivet (22).

9. Assembly comprising a thermal regulation device (1) according to any one of Claims 1 to 8 and an electric battery (2), the device (1) being configured to regulate the temperature of the electric battery (2).

10. Method for filling a thermal regulation device (1) according to any one of Claims 1 to 8, wherein:
- the filling channel (12) is filled with the phase-change material so as to simultaneously fill all of the second set of microchannels (101), and
- the filling channel (12) is closed.
